# EUROPEAN PATENT SPECIFICATION

(11) **EP 0 365 311 B1**
(45) Date of publication and mention of the grant of the patent: **15.05.1996**
(21) Application number: 89310725.0
(22) Date of filing: 18.10.1989
(51) Int. Cl.: H01B 3/30, H01B 13/14, C08G 73/10

(54) **Production process of an insulated wire**
Verfahren zur Herstellung eines isolierten Drahtes
Procédé pour fabriquer un fil isolé

(30) Priority: 20.10.1988 JP 262711/88
(43) Date of publication of application: 25.04.1990
(73) Proprietor: MITSUI TOATSU CHEMICALS, Inc., Chiyoda-Ku Tokyo 100 (JP)
(72) Inventor: Saruwatari, Masumi, Nagoya-Shi (JP); Nakano, Masami, Midori-Ku (JP); Tsuji, Shochi, Tanashi-Shi Tokyo (JP); Moriya, Shinobu, Nagoya-Shi (JP); Ohta, Masahiro, Yokohama-Shi (JP); Nakakura, Toshiyuki, Yokohama-Shi (JP)
(74) Representative: Rackham, Anthony Charles

(56) References cited:
- EP-A- 0 235 294
- EP-A- 0 251 741
- CH-A- 525 536
- Ullmanns Encyklopädie der technischen Chemie, 4th edition, vol. 19, 1980, Verlag Chemie, Weinheim, p. 51
- W. Broy, N.I. Basov (eds.), "Handbuch der Plasttechnik", 1st edition, 1985, VEB Deutscher Verlag für Grundstoffindustrie, Leipzig, p. 116

## Description

The present invention relates to the preparation of an insulated wire using a specific polyimide as insulator.

Recent years have seen dramatic development in the field of electrical and electronic industry. Particularly, as apparatus used in the industry becomes small size and light weight, and hence, more excellent heat resistance is desired to a machine parts and insulating materials.

Aromatic polyimide has excellent mechanical properties, solvent resistance and electrical insulation properties in addition to the highest thermal resistance among organic polymers. Examples of the aromatic polyimide are a polyimide prepared from bis(4-aminophenyl) ether and pyromellitic dianhydride (Frade Name KAPTON, VESPEL; a product of E.I. Du Pont de Nemours & Co.) and a polyimide prepared from bis(4-aminophenyl) ether and 3,3',4,4'-biphenyltetracarboxylic dianhydrides (Frade Name UBILEX; a product of Ube Industries Co.).

Since heat melting is difficult in these polyimides, it is difficult to produce an insulated wire by melt-extrusion process.

Belgian Patent Specification 739061 describes the insulation of electrical wires with particular polyimides whilst European Patent Application Serial No. 235 294 describes polyimides which have a higher heat resistance. However we have found that it is still difficult to produce a satisfactorily insulated wire by a melt-extrusion process using these polyimides.

It is therefore an object of this invention to provide a process for the production of the insulated wire insulated with a polyimide having thermal resistance and by employing a melt-extrusion process.

According to the invention there is provided a process for the preparation of an insulated wire consisting of a conductor and an insulator covering the conductor, the insulator comprising one or more polyimides having recurring structural units represented by the formula: 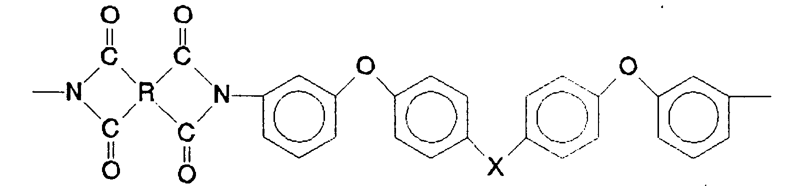 in which R represents a tetravalent radical selected from the group consisting of a monoaromatic radical, a condensed polyaromatic radical or a non-condensed polyaromatic radical wherein the aromatic radicals are mutually connected with a bond or a bridging unit, X represents a single bond, a thio radical, a sulphonyl radical, a carbonyl radical, an isopropylidene radical or a hexafluoroisopropylidene radical,
the process comprising controlling the moisture content of the material of the insulator to 200 ppm by weight or less, heat melting the material of the insulator at a temperature of from 300 to 450°C in a melt-extrusion process and covering the conductor with the insulator and cooling to solidify the insulator.

R is preferably

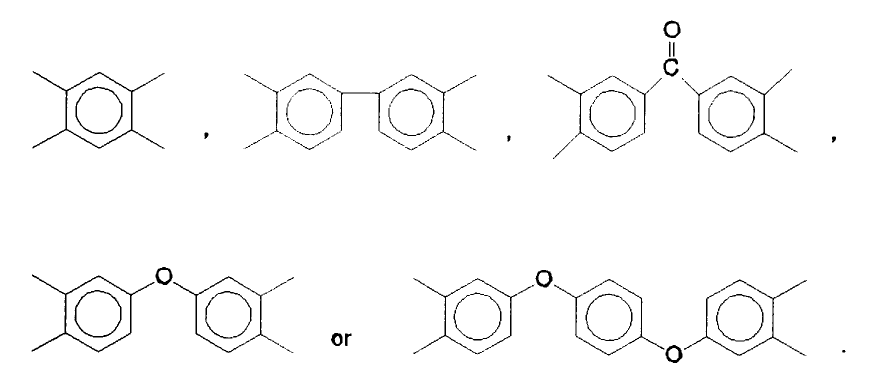

According to this invention, an insulated wire having excellent heat resistance, good surface appearance and high dielectric strength in water of the insulated wire is obtained by a melt extrusion process by using a specific polyimide at a temperature of 300 to 450°C and by controlling the moisture content to 200 ppm or less.

The polyimide used in this invention can be prepared by conducting a dehydration condensation reaction of an aromatic tetracarboxylic dianhydride with an aromatic diamine.

Exemplary aromatic tetracarboxylic dianhydrides which may be used to prepare the polyimide include pyromellitic dianhydride,
1,2,3,4-benzenetetracarboxylic dianhydride,
2,3,6,7-naphthalenetetracarboxylic dianhydride,
1,4,5,8-naphthalenetetracarboxylic dianhydride,
1,2,5,6-naphthalenetetracarboxylic dianhydride,
3,4,9,10-perylenetetracarboxylic dianhydride,
2,3,6,7-anthracenetetracarboxylic dianhydride,
1,2,7,8-phenanthrenetetracarboxylic dianhydride,
3,3',4,4'-biphenyltetracarboxylic dianhydride,
2,2',3,3'-biphenyltetracarboxylic dianhydride,
3,3',4,4'-benzophenonetetracarboxylic dianhydride,
2,2',3,3'-benzophenonetetracarboxylic dianhydride,
2,2-bis(3,4-dicarboxyphenyl)propane dianhydride,
2,2-bis(2,3-dicarboxyphenyl)propane dianhydride,
bis(3,4-dicarboxyphenyl)ether dianhydride,
bis(2,3-dicarboxyphenyl)ether dianhydride,
bis(3,4-dicarboxyphenyl)sulphone dianhydride,
bis(2,3-dicarboxyphenyl)sulphone dianhydride,
2,2-bis(3,4-dicarboxyphenyl)-1,1,1,3,3,3-hexafluoropropane dianhydride,
2,2-bis(3,4-dicarboxyphenyl)-1,1,1,3,3,3-hexachloropropane dianhydride ,
1,1-bis(2,3-dicarboxyphenyl)ethane dianhydride,
bis(2,3-dicarboxyphenyl)methane dianhydride,
bis(3,4-dicarboxypenyl)methane dianhydride,
4,4'-(p-phenylenedioxy)diphthalic dianhydride and
4,4'-(m-phenylenedioxy)diphthalic dianhydride.

The preferred aromatic tetracarboxylic dianhydride used is pyromellitic dianhydride,
3,3',4,4'-biphenyltetracarboxylic dianhydride,
3,3',4,4'-benzophenonetetracarboxylic dianhydride,
bis(3,4-dicarboxyphenyl)ether dianhydride or
4,4'-(p-phenylenedioxy)diphthalic dianhydride .

The aromatic tetracarboxylic dianhydride may be used singly or in combination of two or more.

Exemplary aromatic diamines suitable for use include
4,4'-bis(3-aminophenoxy)biphenyl,
bis[4-(3-aminophenoxy)phenyl]sulphide,
bis[4-(3-aminophenoxy)phenyl]sulphone,
bis[4-(3-aminophenoxy)phenyl]ketone,
2,2-bis[4-(3-aminophenoxy)phenyl]propane and
2,2-bis[4-(3-aminophenoxy)phenyl]-1,1,1,3,3,3-hexafluoropropane.
   These compounds may be used singly or in combination.

Other aromatic diamines may also be used as aromatic diamine ingredients by replacing a part of the above aromatic diamine. The amount of diamine to be replaced is less than 20 % by mole per mole of the total aromatic diamine.

Exemplary other aromatic diamines include,
p-phenylenediamine, m-phenylenediamine, m-aminobenzylamine,
p-aminobenzylamine, 4,4'-diaminobiphenyl, 3,3'-diaminobiphenyl,
3,3′-diaminodiphenyl ether, 4,4'-diaminodiphenyl ether,
4,4'-diaminodiphenyl methane, 3,3'-diaminodiphenyl methane,
1,1-bis(4-aminophenyl)ethane, 1,1-bis(3-aminophenyl)ethane,
2,2-bis(3-aminophenyl)propane, 2,2-bis(4-aminophenyl)propane,
2,2-bis(4-aminophenyl)-1,1,1,3,3,3-hexafluoropropane,
2,2-bis(3-aminophenyl)-1,1,1,3,3,3-hexafluoropropane,
3,3'-diaminodiphenyl sulphide, 4,4'-diaminodiphenyl sulphide,
3,3'-diaminodiphenyl sulphone, 4,4'-diaminodiphenyl sulphone and
3,3'-diaminobenzophenone.

A polyimide used in the invention can be prepared usually by suspending or dissolving the aromatic tetracarboxylic acid dianhydride and the aromatic diamine in the organic solvent and conducting a dehydration condesation reaction and then is separated and purified by commercial method to obtained polyimide powder. The reaction of an aromatic tetracarboxylic acid dianhydride with an aromatic diamine may be also carried out in the absence of a organic solvent.

The polyimide powder can be charged into a processing step as such or after preformed into granulas.

A conductor according to this invention is preferably a metal element or an alloy having a specific resistance of 20 X 10⁻⁶ Ω cm or less. Illustrative metal element which may be used includes, for example, zinc, aluminium, gold, silver, copper, iron, nickel and niobium. Aluminium and copper are preferably used in particular. Exemplary alloy which may be mentioned includes, for example, copper alloys containing 2 % or less of metal elements such as silver, chromium zirconium, tin, lead, tellurium, cadmium and beryllium, aluminium alloys containing 2 % or less of metal elements such as magnesium, silicon, iron and zirconium, and niobium alloys containing metal elements such as titanium, zirconium, tantalum, tin and germanium.

The conductor for use in the present invention may be provided with a plated metal film in order to prevent increase in specific resistance of the conductor, heat evolution of the conductor and reduction in voltage due to oxidative deterioration of the above conductor. Illustrative conductors with the plated metal film are those deposited with tin, zinc, nickel, silver, aluminium, solder and copper.

Size of the conductor for use in this invention is preferably in the range of 0.001 to 2000 mm in sectional area. When the sectional area of the conductor is less than 0.001 mm, the conductor unfavorably tends to break in the production and handling step. On the other hand, sectional area exceeding 2000 mm leads to remarkably high stiffness of the conductor and handling becomes difficult.

The conductor of this invention is exposed to higher temperatures in the melt-extrusion step as compared with conventional melt-extrusion processes, and hence subjected to faster rate of oxidation. Accordingly, it is particularly prefered to use the conductor plated with nickel or silver.

The polyimide used in this invention can be heat-melted with known melt-extrusion equipment to cover the conductor on passing through a conductor covering die represented by a cross-head die, and cooled to obtain the insulated wire of this invention.

The polyimide used in this invention is stored in the form of powder or pellets and contains from 0.5 to 1.0% of moisture in usual storage conditions. Such level of moisture content causes no trouble when articles are prepared by injection moulding. However, it has been found that the moisture gives adverse effects on the charasteristics covering insulator when the insulated wire is produced melt-extrusion process of this invention.

That is, moisture content of 0.5 to 1 % leads to problems particularly on the appearance and dielectric strength in water of the insulated wire.

By controlling the moisture content to 200 ppm or less, we have succeeded in the stable production of insulated wire having exellent properties.

Any method may be used for reducing the moisture content 200 ppm or less. The powder or pellets can be kept for 3 to 24 hours at a temperature in the range from 100 °C to a temperature where polyimide does not fuse, usually 250°C or less. Moisture reduction may also be effectively conducted in a nitrogen atmosphere and/or under reduced pressure.

The melt-extrusion temperature depends upon polymer structure and is usually in the range of 300 to 450 °C, preferably in the range of 350 to 430 °C . When the temperature is lower than 300°C, polyimide resin cannot be fused and hence extrusion is impossible. On the other hand, temperatures exceeding 450 °C are unfavorable because the polyimide resin is decomposed and function of the insulator is impaired by generation of bubbles and decomposition residue.

The thickness of covering layer on the conductor of this invention is preferably in the range of 0.01 to 5 mm. When the thickness is less than 0.01 mm, this is unfavorable because wide fluctuations are found in the thickness of covering layer and electrical defects such as pin holes arise. On the other hand, when the thickness of the covering layer exceeds 5 mm, this may causes difficulty in handling such as bending of the insulated wire.

The present invention will hereinafter be illustrated further in detail by way of various Examples and Comparative Examples.

Characteristic values of polyimide indicated in the Examples and Comparative Examples were measured by the following methods;
(1) Glass transition temperature and melting point
   Glass transition temperature (Tg) and melting point (Tm) were measured in accordance with DSC method. Tm was defined as the peak temperature of a fusion curve.
(2) Melt viscosity
   Melt viscosity was measured with a KOKA-model flow tester. Apparent viscosity was calculated at an apparent shear rate of 200 sec⁻¹ and temperature of 400°C .
(3) Dielectric strength in water
   Dielectric strength test was conducted in water at 20 °C with 60 Hz AC power at a step-up rate of 1000 V/min in accordance with JIS C3005.

### Polyimide 1

Into a reaction vessel equipped with a stirrer, reflux condenser and nitrogen inlet tube, 368.4 g(1 mole) of 4,4'-bis(3-aminophenoxy)biphenyl and 2344 g of N,N-dimethylacetamide were charged. To the resulting solution, 218.1 g(1 mole) of pyromellitic dianhydride was added by portions in a nitrogen atmosphere with caution to prevent temperature rise of the solution. The reaction was continued for about 20 hours with stirring at the room temperature. The polyamic acid thus obtained had an inherent viscosity of 3.21 *dℓ/g.* To the solution of polyamic acid obtained, 30.3 g(0.3 mole) of triethylamine and 30.6 g(0.3 mole) of acetic anhydride were added over about 30 minuted and successively stirred for about 30 minutes. The reaction solution thus obtained was charged with 2000 g of methanol. The precipitated powder was filtered, washed with methanol and acetone, and then dried at 300 °C for 8 hours in a nitrogen atmosphere. Polyimide powder thus obtained was 517 g. The yield was 94 %. Polyimide obtained was a crystalline resin and had a glass transition temperature of 271 °C, melting point of 389°C and melt viscosity of 5500 poise (550 Pa.S)*.*

### Polyimide 2

The same procedures as described in Polyimide 1 were carried out by using
4,4'-bis[4-(3-aminophenoxy)phenyl]-1,1,1,3,3,3-hexafluoropropane and pyromellitic dianhydride. Polyimide obtained was a crystalline resin and had a glass transition temperature of 247 °C, melting point of 385°C and melt viscosity of 4800 poise (480 Pa.S)

### Polyimide 3-15

The same procedures as described in Polyimide 1 were carried out by using various combinations of aromatic tetracarboxylic dianhydrides and aromatic diamines as illustrated in Table 1. Glass transition temperature, melting point and melt viscosity of polyimide thus obtained are illustrated in Table 1.

### Example 1

Polyimide powder 1 was dried at 150 °C for 24 hours. Moisture content of the polyimide powder was 180 ppm. The polyimide powder fed through a screw compactor to an extruder having a diameter of 15 mm and L/D ratio of 22, and heat-melted at 420 °C .

A 20 AWG silver plated copper wire was previously heated to 200 °C and fed to a crosshead die.

Take-off speed of the copper wire was adjusted so as to obtain thickness of insulator layer of about 0.2 mm. The take-off speed in the operation was 1 m/min. A covered wire extruded out the die was allowed to cool. The insulated wire thus obtained was excellent in thermal resistance. Extrusion conditions and properties of the insulated wire are illustrated in Table 2.

### Example 2

Polyimide powder 2 was dried at 150 °C for 24 hours. Moisture content of the polyimide powder was 200 ppm. The polyimide powder fed through a screw compactor to an extruder having a diameter of 15 mm and LID ratio of 22, and heat-melted at 400 °C . Fused resins was extruded through a nozzle having an internal diameter of 2 mm at a rate of 186 g/h, allowed to cool and cut into pellets of about 3 mm in length. The pellets were extruded by the same procedures as described in Example 1.

The insulated wire thus obtained was satisfactory in

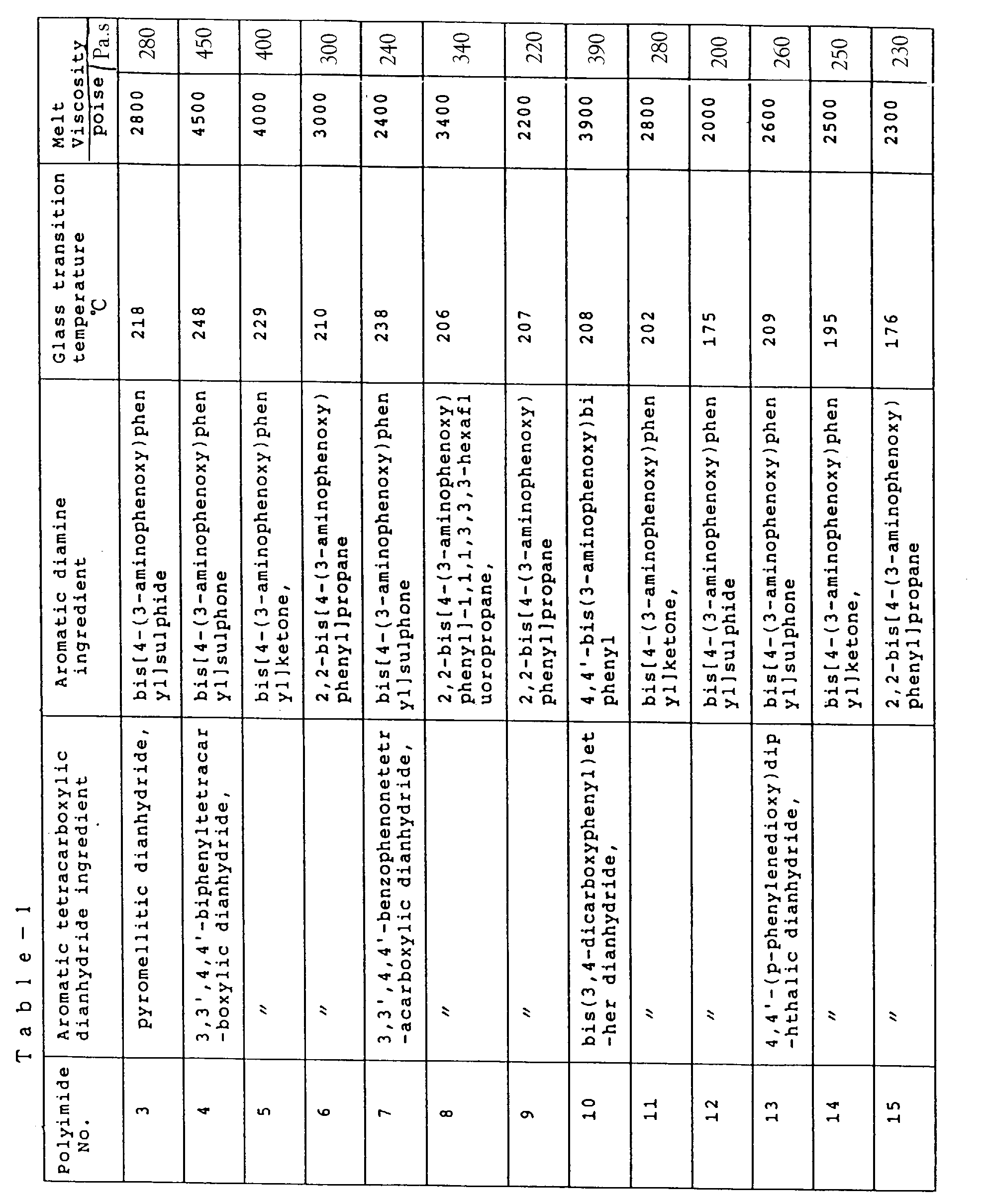

appearance and excellent in thermal resistance. Physical properties of the insulated wire are illustrated in Table 2.

### Exampe 3-15

Polyimide powder 3-15 was melt-extruded by the same procedures as described in Example 1. The insulated wire thus obtained were satisfactory in appearance and excellent in thermal resistance. Extrusion conditions and properties of the insulated wire are illustrated in Table 2.

### Comparative Example 1

Polyimide powder 1 was melt-extruded by the same procedures as described in Example 1 except that extrusion temperature was 460 °C. However, bubbles and residual foreign matter were generated in the covering layer of the wire thus obtained as a result of decomposition of the resin. Surface appearance of the insulated wire was hence extremely poor.

### Comparative Example 2

Polyimide powder 1 was dried at 90°C for 5 hours Moisture content of the polyimide powder was 300 ppm. This polyimide powder 2 was melt-extruded by the same procedures as described in Example 1. Bubbles generated in the covering layer of the wire. Surface appearance of the insulated wire was hence extremely poor.

### Comparative Example 3

Polyimide powder 2 was melt-extruded by the same procedures as described in Example 2 except that extrusion temperature was 470 °C. Bubbles and residual foreign matter were generated in the covering layer of the wire thus obtained as a result of decomposition of the resin. Surface appearance of the insulated wire was hence extremely poor.

### Comparative Example 4

Polyimide powder 7 was melt-extruded by the same procedures as described in Example 1 except that extrusion temperature was 290 °C. However, extrusion could not be carried out.

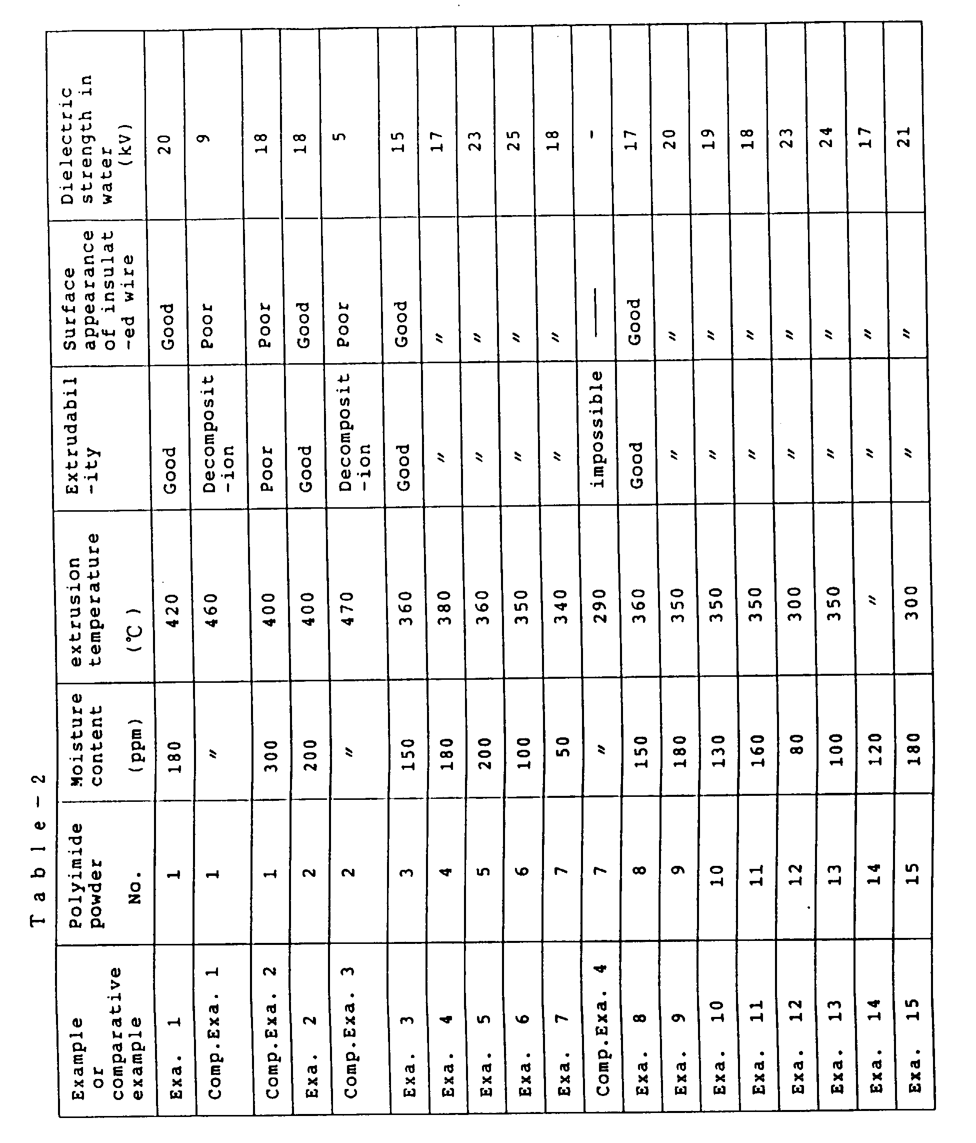

## Claims

1. A process for the preparation of an insulated wire consisting of a conductor and an insulator covering the conductor, the insulator comprising one or more polyimides having recurring structural units represented by the formula: 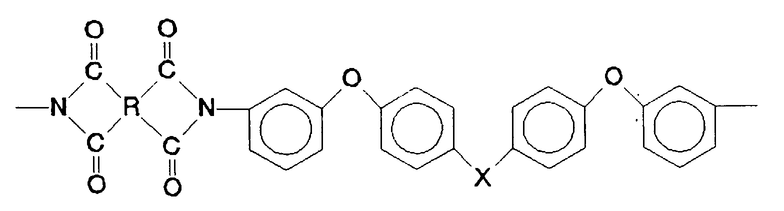 in which R represents a tetravalent radical selected from the group consisting of a monoaromatic radical, a condensed polyaromatic radical or a non-condensed polyaromatic radical wherein the aromatic radicals are mutually connected with a bond or a bridging unit, X represents a single bond, a thio radical, a sulphonyl radical, a carbonyl radical, an isopropylidene radical or a hexafluoroisopropylidene radical,
the process comprising controlling the moisture content of the polyimide to 200 ppm or by weight or less, heat melting the material of the insulator at a temperature of from 300 to 450°C in a melt-extrusion process and covering the conductor with the insulator and cooling to solidify the insulator.

2. A process as claimed in Claim 1 in which R represents:

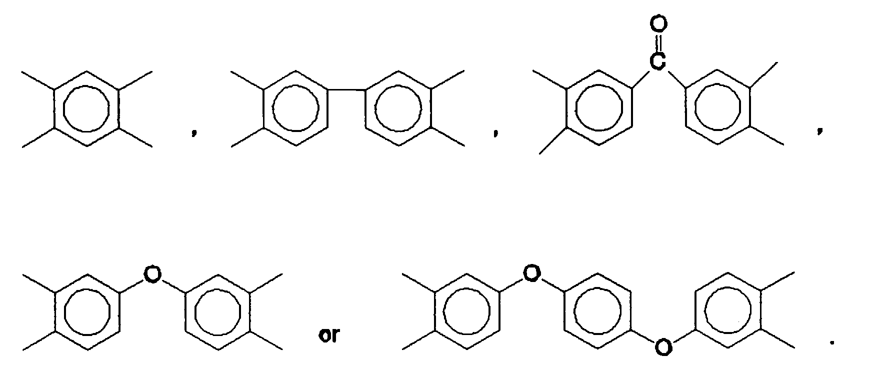

## Patentansprüche

1. Verfahren zur Herstellung eines isolierten Drahtes, bestehend aus einem Leiter und einer den Leiter umgebenden Isolierhülle, wobei die Isolierhülle aus einem oder mehreren Polyimiden mit wiederkehrenden strukturellen Einheiten der folgenden Formel besteht: 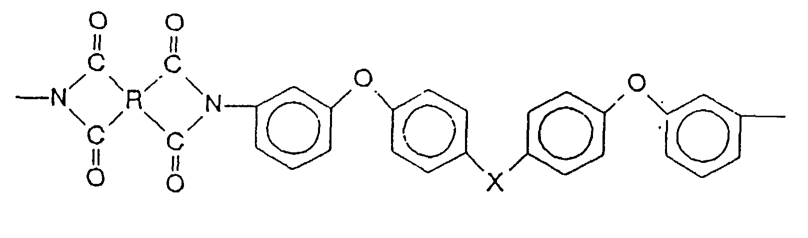 worin R ein tetravalentes Radikal bedeutet, das aus der ein monoaromatisches Radikal, ein kondensiertes polyaromatisches Radikal oder ein nichtkondensiertes polyaromatisches Radikal umfassenden Gruppe ausgewählt wird, worin die aromatischen Radikale über eine Bindung oder eine Brückeneinheit miteinander verbunden sind, und X eine Einfachbindung, ein Thio-, ein Sulphonyl-, ein Carbonyl-, ein Isopropyliden- oder ein Hexafluorisopropylidenradikal bedeutet,
wobei das Verfahren die Regelung des Feuchtigkeitsgehalts im Polyimid von 200 ppm, bezogen auf die Masse, oder weniger, das Heißschmelzen der Isolierhülle bei einer Temperatur von 300 bis 450 °C in einem Schmelzextrusionsprozeß, die Ummantelung des Leiters mit der Isolierhülle und das Abkühlen zur Härtung der Isolierhülle umfaßt.

2. Verfahren nach Anspruch 1, worin R folgendes bedeutet:

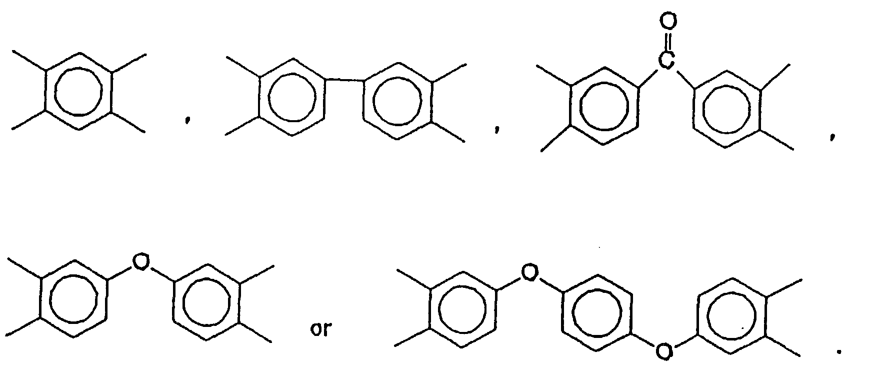

## Revendications

1. Procédé pour la préparation d'un fil isolé, constitué d'un conducteur et d'un isolant recouvrant le conducteur, l'isolant comprenant un ou plusieurs polyimides ayant des unités structurelles récurrentes représentées par la formule : 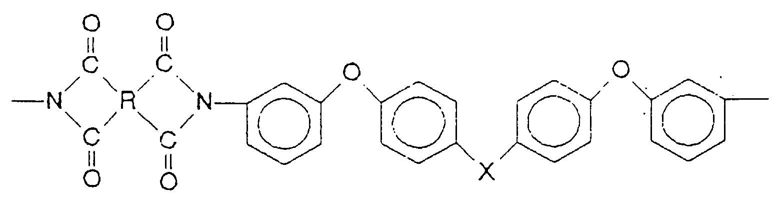 dans laquelle R représente un radical tétravalent choisi dans le groupe composé d'un radical monoaromatique, un radical polyaromatique condensé ou un radical polyaromatique non condensé ; les radicaux aromatiques étant mutuellement reliés à une liaison ou à une unité de pontage ; X représentant une liaison simple, un radical thio, un radical sulphonyle, un radical carbonyle, un radical isopropylidène ou un radical hexafluoro-isopropylidène,
le procédé comprenant : le contrôle de la teneur en humidité du polyimide, à une valeur de 200 ppm ou moins, en poids ; la fusion par chauffage du matériau de l'isolant à une température comprise dans la plage allant de 300 à 450 °C dans un processus de fusion-extrusion et le recouvrement du conducteur par l'isolant et le refroidissement pour solidifier l'isolant.

2. Procédé selon la revendication 1, dans lequel R représente :
